# EUROPEAN PATENT SPECIFICATION

(11) **EP 3 676 911 B1**
(45) Date of publication and mention of the grant of the patent: **09.12.2026**
(21) Application number: 17778281.0
(22) Date of filing: 04.10.2017
(51) Int. Cl.: H01Q 21/00, H01Q 21/28, H01Q 5/42

(54) **MULTIBAND ANTENNA SYSTEM**
MEHRBAND-ANTENNENSYSTEM
SYSTÈME D'ANTENNE MULTIBANDE

(43) Date of publication of application: 08.07.2020
(73) Proprietor: Huawei Technologies Co., Ltd., Longgang District Shenzhen, Guangdong 518129 (CN)
(72) Inventor: GONZALEZ, Ignacio, 80992 Munich (DE); SPRANGER, Christoph, 80992 Munich (DE); BISCONTINI, Bruno, 80992 Munich (DE); RIST, Bernhard, 80992 Munich (DE); OBERMAIER, Johann Baptist, 80992 Munich (DE)
(74) Representative: Maiwald GmbH
(86) International application number: PCT/EP2017/075136
(87) International publication number: WO 2019/068317

(56) References cited:
- EP-A1- 0 056 205
- CN-A- 103 904 437
- US-A- 5 557 291
- US-A1- 2004 201 542
- US-B1- 6 239 762
- PEERAPONG UTHANSAKUL ET AL: "Open-Loop Beamforming Technique for MIMO System and Its Practical Realization", INTERNATIONAL JOURNAL OF ANTENNAS AND PROPAGATION, vol. 2011, 19 May 2011 (2011-05-19), pages 1 - 13, XP055459768, ISSN: 1687-5869, DOI: 10.1155/2011/723719
- JAWORSKI G ET AL: "Dual frequency & dual-linear polarization integrated Antenna array for application in Synthetic Aperture Radar", MICROWAVE CONFERENCE (EUMC), 2010 EUROPEAN, IEEE, PISCATAWAY, NJ, USA, 28 September 2010 (2010-09-28), pages 1714 - 1717, XP031786387, ISBN: 978-1-4244-7232-1
- ZHENG YULIN ET AL: "Research of multi-beams antenna array using butler matrix in MIMO communication", PROCEEDINGS OF 2014 3RD ASIA-PACIFIC CONFERENCE ON ANTENNAS AND PROPAGATION, IEEE, 26 July 2014 (2014-07-26), pages 225 - 227, XP032710559, DOI: 10.1109/APCAP.2014.6992459

## Description

### TECHNICAL FIELD

The present invention relates to a multiband antenna system, in particular to a multiband antenna system suitable for use in a massive multiple input multiple output, mMIMO, system.

### BACKGROUND

Cellular mobile communication systems often need to support multiple communication standards (e.g. LTE, UMTS, GSM) as well as a variety of frequency bands which are determined by regulatory bodies. The use of multiple frequency bands in particular requires the use of different antenna systems adapted to the physical characteristics of each of the frequency bands.

With the growing demand for a deeper integration of antennas with radios, e.g. Active Antenna Systems (AAS), new ways of designing compact multiband antenna systems are being requested without compromising the antenna system performance. Furthermore, with the LTE rollout almost complete, preparations are underway for the upcoming 5G infrastructure. One of the key technologies to enable the next generation of mobile communications is mMIMO below 6 GHz.

Antenna locations for cellular mobile communication systems often are space-restricted so that the use of multiple separate antennas for the different frequency bands is not feasible. Furthermore, site upgrades and new deployments of antenna systems face limiting regulations which will develop slower than technology.

US 6 23 762 B1 describes that a crossed-slot antenna in a first ground plane has a first feed, in stripline form including a second ground plane, which underlies a portion of one of the orthogonal slots for exciting a first polarization. A conductive lip of the other slot extends through the plane of the first feed, and opens through the second ground plane. A second feed includes conductors underlying the extended other slot. In a preferred embodiment, the feeds for the first and second slots are balanced. In a particularly advantageous embodiment, an array of such crossed slots is colocated with an array of enhanced-gain patch antennas.

Peerapong Uthansakul et al: "Open-Loop Beamforming Technique for MIMO and its Practical Realization", International Journal of Antennas and Propagation, vol. 2011, 19 May 2011, pages 1-13, aims to investigate the benefit of using an open-loop beamforming for MIMO system in practical approaches. The low-profile concept of open-loop beamforming, which is convenient for implementation is proposed by just inserting Butler matrices at both transmitter and receiver. The simulation and measurement results indicate that the open-loop beamforming with Butler matrix outperforms the conventional MIMO system.

### SUMMARY

It is an objective of the present invention to provide a multiband antenna system, wherein the multiband antenna system overcomes one or more of the above-mentioned problems of the prior art. Furthermore, it is an object of the present invention to provide a concept for an improved multiband antenna system.

The invention is defined by the appended claims. Embodiments and examples not covered by the claims are meant to illustrate, and facilitate the understanding of, the claimed invention.

According to an aspect of the invention, a multiband antenna system comprises a first massive multiple input multiple output, mMIMO, antenna array comprising a plurality of first antenna elements for use in a first frequency band. Furthermore the multiband antenna system comprises at least a second antenna array comprising a plurality of second antenna elements for use in a second frequency band lower than the first. The second antenna array is at least partially interleaved with the first mMIMO antenna array. The multiband antenna system according to this aspect comprises a distribution network for distribution of input and/or output signals of the antenna elements of the second antenna array. The distribution network is arranged in a distribution layer. The multiband antenna system according to this aspect further comprises a transition device which in turn comprises a first set of first connectors for connecting to the first mMIMO antenna array, a second set of second connectors for connecting to a mMIMO radio frequency, RF, module as well as interconnections from the first set of first connectors to the second set of second connectors. The interconnections traverse the distribution layer.

The transition device allows signals for the first mMIMO antenna array to be transported through the distribution layer. Thereby it is made possible to interleave first antenna elements of the first mMIMO antenna array with second antenna elements from a second antenna array if the second antenna array uses a distribution network, as usually such a distribution network physically blocks the way for any other signals to be routed towards the first antenna elements. Thus, the transition device allows for the antenna system to be constructed in a compact manner as the different antenna arrays may have overlapping apertures. Due to this compact construction, existing antenna sites may be reused and multiple antenna apertures may be provided in the same space. The required dimensions of a multiband antenna systems are reduced. In addition standard RF modules can be used as the second set of connectors can be arranged to fit to the connectors of the RF module without having to take into account the location of the antenna elements of the mMIMO antenna-array.

In a further implementation of the first aspect, the first mMIMO antenna array comprises a reflector and the distribution layer is arranged in parallel to the reflector. Such an arrangement, in which different parts of the antenna system are oriented in parallel to each other, is very compact and makes it easier to satisfy space constraints.

In a further implementation of the first aspect, the distribution network comprises gaps through which the interconnections traverse the distribution network. Such gaps may be easily placed to allow the traversal of the distribution layer by the transition device. In this way, it is not necessary to employ any additional waveguides to route around the distribution layer.

In a further implementation of the first aspect, each interconnection comprises a first part traversing the distribution network to connect with the first connector, a second part for connecting with the second connector and a connecting part for routing signals between the first part and the second part. In this way, it becomes possible to separate the routing of the signals into two different geometric directions, for example into two orthogonal directions. From this it follows that the transition device may be mostly flat and only the first part and the second part extend in the direction of the antenna arrays. This allows a very compact packing of the transition device together with the other components of the antenna system.

In a further implementation of the first aspect, the distribution network is physically split into distribution sub-networks for different polarisations, wherein the gaps are arranged between the distribution sub-networks. In this way, the gaps may be placed more easily.

In a further implementation of the first aspect, each of the first connectors is connected by one of the interconnections to one second connector. Such a 1 to 1 relationship between the first set of connectors and the second set of connectors allows for each of the antenna elements of the first mMIMO antenna array to be linked to exactly one signal source/sink from the mMIMO RF module.

In a further implementation of the first aspect, the interconnections equalise a phase of each signal for each of the first antenna elements. The transition device thus provides a standardised interface for the second set of connectors. The mMIMO RF module does not need to be explicitly matched to one particular mMIMO antenna array.

In a further implementation of the first aspect, the interconnections have individual physical lengths for providing the equalisation. This kind of equalisation is easy to implement and very reliable.

In a further implementation of the first aspect, the antenna system further comprises an mMIMO RF module for driving the first mMIMO antenna array, wherein the second connectors are connected to the mMIMO RF module.

In a further implementation of the first aspect, the first mMIMO array further comprises a feeding network connected to the first antenna elements and the first connectors are connected to the feeding network. The feeding network simplifies the arrangement of the interconnections, namely their positioning at the gaps in the distribution network. Any RF signals from the first set of connectors may be routed to the actual antenna elements.

In a further implementation of the first aspect, the feeding network provides a feeding connection to more than one of the first antenna elements for one of the first connectors. This may for example be used to implement easy beam tilting.

These and other aspects of the invention will be apparent from the embodiment(s) described below.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, but modifications of these embodiments are possible without departing from the scope of the present invention as defined in the claims.
- Fig. 1: Shows a schematic view of the structure of a multiband antenna system according to an embodiment of the invention and
- Fig. 2: shows a schematic cross-section through a multiband antenna system according to a further embodiment of the invention.

### DETAILED DESCRIPTION

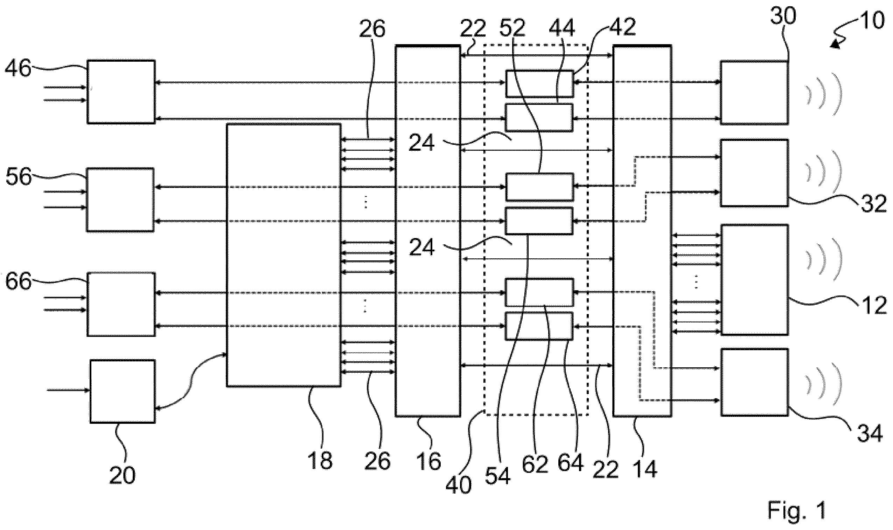

A multi-band antenna system 10 according to a first embodiment of the invention is shown in Fig. 1.

The multi-band antenna system 10 comprises a first mMIMO array 12 comprising a plurality of first antenna elements (not shown). The first mMIMO array 12 comprises a feeding network 14 which is connected to a transition device 16. The feeding network 14 feeds the first antenna elements of the first mMIMO array 12. The transition device 16 is connected to an mMIMO RF module 18 which provides signals to and receives signals from the first mMIMO array 12 through the transition device 16. Digital input signals are routed to the mMIMO RF module 18 from an mMIMO input/output 20.

The multi-band antenna system 10 furthermore comprises a second antenna array 30 which is connected to a distribution network 40. The distribution network 40 comprises a first distribution sub-network 42 for distributing signals for a first e.g. positive (+45°) polarisation and a second distribution sub-network 44 for distributing signals for a second e.g. negative (-45°) polarisation. The first distribution sub-network 42 and the second distribution sub-network 44 are connected to an antenna input/output 46.

In this embodiment there is a third antenna array 32, connected to a first distribution sub-network 52 and a second distribution sub-network 54 which are both connected to another antenna input 56. Furthermore, the multi-band antenna system 10 comprises a fourth antenna array 34, connected to a first distribution sub-network 62 and a second distribution sub-network 64 which is in turn connected to a further antenna input 66.

The transition device 16 comprises first parts 22 which traverse the distribution layer 40 and thus the distribution sub-networks 42, 44, 52, 54, 62, 64 comprised therein to connect with first connectors (not shown in Fig. 1) on the feeding network 14. To allow the first parts 22 to traverse the distribution layer there are gaps 24 between some distribution sub-networks 42, 44, 52, 54, 62, 64, for example between distribution sub-networks of opposite polarisation. There is, for example one gap 24 between the negative polarisation distribution network 44 and the positive polarisation distribution network 52.

The transition device 16 further comprises second parts 26 for connecting to second connectors (not shown in Fig. 1) on the mMIMO RF module 18.

Of the four antenna arrays 12, 30, 32, 34, the first mMIMO antenna array 12 may operate below 6 GHz in a first frequency band. The second, third and fourth antenna arrays 30, 32, 34 may operate in a second frequency band, a third frequency band and a fourth frequency band, respectively. The second, third and fourth frequency band each may comprise frequencies that are lower than those of the first frequency band. The second, third and fourth frequency bands may or may not overlap.

The third antenna array 32 and the fourth antenna array 34 as well as the associated distribution networks 52, 54, 62, 64 and antenna inputs 56, 66 are optional. More or fewer antenna arrays may be provided.

The feeding network 14 may provide a fixed phase and amplitude distribution between the first antenna elements of the first mMIMO antenna array 12. In this way, the feeding network 14 may distribute signals among the first antenna elements in a way to, for example, provide a predetermined beam tilt or other beamforming function. The feeding network 14 thus may provide an interface between the transition device and the antenna elements. The feeding network 14 may be realised as a multilayer printed circuit board, PCB, and may also act as a reflector for the first mMIMO antenna array 12.

The transition device 16 interconnects the feeding network 14 of the first mMIMO antenna array 12 with the mMIMO RF module 18. The transition device 16 is arranged and constructed to physically traverse the distribution layer by means of its first parts 22. The first parts 22 may be arranged such that they traverse the distribution layer through gaps 24 in the distribution layer. These gaps 24 may for example be arranged between each of the distribution sub-networks 42, 44, 52, 54, 62, 64.

The transition device 16 may further equalise the phase of all the first antenna elements of the first mMIMO antenna array 12. This means that the transition device 16 will provide on its second set of second connectors access to the first antenna elements in a defined way such that the mMIMO RF module 18 does not need to have any knowledge about the exact layout and/or construction of the first antenna elements in order to perform correctly. The signal path from the inputs (e.g. the second parts 26) of the transition device 16 to the first antenna elements and/or the feeding network 14 shows equal phase to the outputs of the mMIMO RF module 18. In this way, the transition device 16 may also be adapted to different mMIMO RF modules 18.

The mMIMO RF module 18 may be a radio unit that provides power and signal processing to the first mMIMO antenna array 12. The mMIMO RF module 18 is connected to the first antenna elements of the first mMIMO array 12 through the transition device 16. The mMIMO RF module 18 may control the first antenna elements such that the combination provides an active antenna system (AAS).The mMIMO RF module 18 may be field installable and/or field exchangeable.

The first mMIMO antenna array 12 may be constructed without a feeding network 14. In this case, the transition device 16 may directly connect to the first antenna elements of the first mMIMO antenna array 12 and not go through a feeding network 14. This may be the case in particular if the first mMIMO antenna array 12 comprises only individual first antenna elements that are not grouped. In this case, each of the second connectors connected to the mMIMO RF module 18 corresponds to one first antenna element of the first mMIMO antenna array 12.

The distribution layer 40 may comprise a multitude of distribution sub-networks 42, 44, 52, 54, 62, 64. A distribution sub-network 42, 44, 52, 54, 62, 64 is a device that provides a controllable phase and amplitude distribution from its input to its outputs and vice versa. Accordingly, the distribution layer 40 and/or each of the distribution sub-networks 42, 44, 52, 54, 62, 64 may be considered to provide the function of a phase-shifter. The number of outputs of the distribution layer 40 depends on the configuration of the antenna array 30, 32, 34 it feeds and controls.

In some instances, the distribution layer 40 may have one input per polarisation of the antenna element to feed. One phase-shifting distribution layer 40 may provide its function for two polarisations in the same physical device. In the present embodiment, however, the distribution layer 40 is subdivided into independent components for each polarisation. These components are the distribution sub-networks 42, 44, 52, 54, 62, 64. As these distribution sub-networks 42, 44, 52, 54, 62, 64 are independent of each other, they may be constructed in a way such that there are gaps 24 between them. It is then possible to route the first parts 22 of the transition device 16 through these gaps 24 to make contact with the first mMIMO array 12.

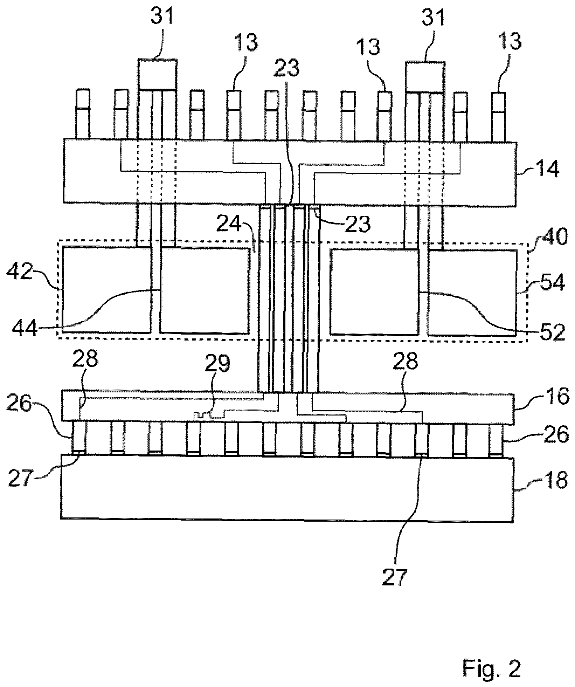

The further embodiment shown in Fig. 2 follows similar construction principles so that similar features are designated with the same reference numerals as before. To avoid unnecessary repetition, features that have an identical or mostly identical function as before will not be described again.

In this embodiment, the transition device 16 comprises first connectors 23 for connecting to the feeding network 14 of the first mMIMO antenna array 12 and second connectors 27 for connecting to the mMIMO RF module 18. The transition device 16 further comprises interconnections between the first connectors 23 and the second connectors 27. Each of the interconnection comprises a first part 22 connected to a first connector 23, a second part 26 connected to a second connector 27 and a connecting part 28 which routes signals between a first part 22 and a second part 26. Each connecting part 28 may connect exactly one of the first parts 22 to exactly one of the second parts 26.

The connecting parts 28 may comprise delay sections 29. These delay sections 29 increase the physical and thus the electrical length of any connecting part 28 which comprises them. By selecting and implementing appropriate delay sections 29, the phase of all the interconnections or a predetermined selection of interconnections may be equalised.

The connecting parts 28 may be implemented as metal layers on a printed circuit board (PCB). The first and second parts 22, 26 may be implemented as cylindrical pins or other applicable waveguides. Several different types of connectors may be used as connectors 23, 27. In one embodiment, connections may be made for example with MMBX connectors.

The distribution layer 40 comprises four distribution subnetworks 42, 44, 52, 54. The first distribution subnetworks 42, 52 carry signals having a first polarisation and the second distribution subnetworks 44, 54 carry signals having a second polarisation. The distribution subnetworks 42, 44, 52, 54 are connected to second antenna elements 31 comprised in a second antenna array 30. A gap 24 is left open between the second distribution subnetwork 44 and the first distribution subnetwork 52.

The first parts 22 physically traverse the distribution layer 40 through the gap 24. The first connectors 23 connect with the feeding network 14 which routs each of the signals transmitted via the first connectors 23 to one or more first antenna elements 13 comprised in the first mMIMO antenna array 12.

Embodiments of the invention as described herein allow the coexistence of a mMIMO system with several passive antenna arrays as it provides a way to suitably interconnect all the antenna arrays and feeding systems and networks while keeping the geometric volume of the antenna system at a minimum. The reduced size simplifies new site acquisition and site upgrades. Existing mechanical support structures may be reused as the wind load of the antenna system according to the invention may be equivalent to that of previously installed antenna systems. Due to the increased number of ports, it may be suitable for site-sharing which significantly reduces the operating costs of network operators.

The invention has been described in conjunction with various embodiments herein. However, other variations to the disclosed embodiments can be understood and affected by those skilled in the art in practising the claimed invention, from a study of the drawings, the disclosure, and the appended claims. In the claims, the word "comprising" does not exclude other elements or steps, and the indefinite article "a" or "an" does not exclude a plurality. The number of certain elements used in the embodiments may be changed according to the needs as determined by the skilled person, e.g. the number of antenna elements, distribution networks, antenna arrays and the numbers given herein shall not be understood to delimit the invention. The mere fact that certain measures are recited in mutually different dependent claims does not indicate that the combination of these measures cannot be used to advantage. Although the present invention and its advantages have been described in detail, it should be understood that various changes, substitutions, alterations, modifications and combinations can be made herein without departing from the scope of the invention as defined by the appended claims.
- 10: multi-band antenna system
- 12: first mMIMO antenna array
- 13: first antenna element
- 14: feeding network
- 16: transition device
- 18: mMIMO RF module
- 20: mMIMO input
- 22: first part
- 23: first connector
- 24: gap
- 26: second part
- 27: second connector
- 28: connecting part
- 29: delay section
- 30: second antenna array
- 31: second antenna element
- 32: third antenna array
- 34: fourth antenna array
- 40: distribution layer
- 42: first distribution sub-network
- 44: second distribution sub-network
- 46: antenna input
- 52: first distribution sub-network
- 54: second distribution sub-network
- 56: antenna input
- 62: first distribution sub-network
- 64: second distribution sub-network
- 66: antenna input

## Claims

1. A multiband antenna system (10), comprising:
- a first massive multiple input multiple output, mMIMO, antenna array (12) comprising a plurality of first antenna elements (13) for use in a first frequency band,
- at least a second antenna array (30) comprising a plurality of second antenna elements (31) for use in a second frequency band lower than the first,
wherein the second antenna array (30) is at least partially interleaved with the first mMIMO antenna array (12),
- a distribution network (42, 44, 52, 54, 62, 64) for distributing input and/or output signals of the antenna elements of the second antenna array arranged in a distribution layer (40),
- a feeding network (14) disposed to a first side of the distribution layer and connected to first antenna elements (13);
- a transition device (16) disposed to a second side of the distribution layer and connected to a mMIMO radio frequency, RF, module (18);
wherein the transition device (16) comprises:
- a first set of first connectors (23) for connecting to the first mMIMO antenna array (12), and the first connectors (23) are connected to the feeding network (14);
- a second set of second connectors (27) for connecting to the mMIMO RF module (18), and
- interconnections from the first set of first connectors (23) to the second set of second connectors (27) traversing the distribution layer (40), ;
wherein the distribution network comprises gaps (24) through which the interconnections traverse the distribution network; and
wherein each interconnection comprises a first part (22) traversing the distribution network (42, 44, 52, 54, 62, 64) to connect with the first connector (23), a second part (26) for connecting to the second connector (27) and a connecting part (28) for routing signals between the first part (22) and the second part (26).

2. Multiband antenna system according to claim 1, wherein the first mMIMO antenna array comprises a reflector and wherein the distribution layer (40) is arranged in parallel to the reflector.

3. Multiband antenna system according to any of the claims 1 or 2, wherein the distribution network is physically split into distribution sub-networks (42, 44, 52, 54, 62, 64) for different polarisations, wherein the gaps (24) are arranged between the distribution sub-networks (42, 44, 52, 54, 62, 64).

4. Multiband antenna system according to any of the preceding claims, wherein each of the first connectors (23) is connected by one of the interconnections to one second connector (27).

5. Multiband antenna system according to any of the preceding claims, **characterized in that** the interconnections equalize a phase of each signal for each of the first antenna elements (13).

6. Multiband antenna system according to claim 5, **characterized in that** the interconnections have individual physical lengths for providing the equalization.

7. Multiband antenna system according to any of the previous claims, further comprising a mMIMO RF module (18) for driving the first mMIMO antenna array (12), wherein the second connectors (27) are connected to the mMIMO RF module (18).

8. Multiband antenna system according to any of the previous claims, wherein the feeding network (14) provides a feeding connection to more than one of the first antenna elements (13) for one of the first connectors (23).

## Patentansprüche

1. Mehrband-Antennensystem (10), umfassend:
- ein erstes massives Antennenarray mit mehreren Eingängen und mehreren Ausgängen, mMIMO-Antennenarray, (12), umfassend eine Vielzahl von ersten Antennenelementen (13) zur Verwendung in einem ersten Frequenzband,
- mindestens ein zweites Antennenarray (30), umfassend eine Vielzahl von zweiten Antennenelementen (31) zur Verwendung in einem zweiten Frequenzband, das niedriger als das erste ist, wobei das zweite Antennenarray (30) mindestens teilweise mit dem ersten mMIMO-Antennenarray (12) verschachtelt ist,
- ein Verteilungsnetzwerk (42, 44, 52, 54, 62, 64) zum Verteilen von Eingangs- und/oder Ausgangssignalen der Antennenelemente des zweiten Antennenarrays, das in einer Verteilungsschicht (40) angeordnet ist,
- ein Speisenetzwerk (14), das auf einer ersten Seite der Verteilungsschicht angeordnet und mit ersten Antennenelementen (13) verbunden ist;
- eine Übergangsvorrichtung (16), die auf der zweiten Seite der Verteilungsschicht angeordnet und mit einem mMIMO-Hochfrequenzmodul, HF-Modul, (18) verbunden ist;
wobei die Übergangsvorrichtung (16) Folgendes umfasst:
- einen ersten Satz von ersten Steckverbindern (23) zum Verbinden mit dem ersten mMIMO-Antennenarray (12), wobei die ersten Steckverbinder (23) mit dem Speisenetzwerk (14) verbunden sind;
- einen zweiten Satz von zweiten Steckverbindern (27) zum Verbinden mit dem mMIMO-HF-Modul (18), und
- Verknüpfungen aus dem ersten Satz von ersten Steckverbindern (23) mit dem zweiten Satz von zweiten Steckverbindern (27), welche die Verteilungsschicht (40) durchlaufen;
wobei das Verteilungsnetzwerk Lücken (24) umfasst, durch welche die Verknüpfungen das Verteilungsnetzwerk durchlaufen; und
wobei jede Verknüpfung einen ersten Teil (22), der das Verteilungsnetzwerk (42, 44, 52, 54, 62, 64) durchläuft, um sich mit dem ersten Steckverbinder (23) zu verbinden, einen zweiten Teil (26) zum Verbinden mit dem zweiten Verbinder (27) und einen Verbindungsteil (28) zum Weiterleiten von Signalen zwischen dem ersten Teil (22) und dem zweiten Teil (26) umfasst.

2. Mehrband-Antennensystem nach Anspruch 1, wobei das erste mMIMO-Antennenarray einen Reflektor umfasst, und wobei die Verteilungsschicht (40) parallel zu dem Reflektor angeordnet ist.

3. Mehrband-Antennensystem nach einem der Ansprüche 1 oder 2, wobei das Verteilungsnetzwerk physikalisch in Verteilungsteilnetzwerke (42, 44, 52, 54, 62, 64) für verschiedene Polarisationen unterteilt ist, wobei die Lücken (24) zwischen den Verteilungsteilnetzwerken (42, 44, 52, 54, 62, 64) angeordnet sind.

4. Mehrband-Antennensystem nach einem der vorhergehenden Ansprüche, wobei jeder der ersten Steckverbinder (23) durch eine der Verknüpfungen mit einem zweiten Steckverbinder (27) verbunden ist.

5. Mehrband-Antennensystem nach einem der vorhergehenden Ansprüche, **dadurch gekennzeichnet, dass** die Verknüpfungen eine Phase jedes Signals für jedes der ersten Antennenelemente (13) ausgleichen.

6. Mehrband-Antennensystem nach Anspruch 5, **dadurch gekennzeichnet, dass** die Verknüpfungen individuelle physikalische Längen zum Bereitstellen der Ausgleichung aufweisen.

7. Mehrband-Antennensystem nach einem der vorhergehenden Ansprüche, ferner umfassend ein mMIMO-HF-Modul (18) zum Antreiben des ersten mMIMO-Antennenarrays (12), wobei die zweiten Steckverbinder (27) mit dem mMIMO-HF-Modul (18) verbunden sind.

8. Mehrband-Antennensystem nach einem der vorhergehenden Ansprüche, wobei das Speisenetzwerk (14) für einen der ersten Steckverbinder (23) eine Speiseverbindung zu mehr als einem der ersten Antennenelemente (13) bereitstellt.

## Revendications

1. Système d'antenne multibande (10), comprenant :
- un premier réseau d'antennes massif à entrées multiples et sorties multiples, mMIMO, (12) comprenant une pluralité de premiers éléments d'antenne (13) destinés à être utilisés dans une première bande de fréquences,
- au moins un second réseau d'antennes (30) comprenant une pluralité de seconds éléments d'antenne (31) destinés à être utilisés dans une seconde bande de fréquences inférieure à la première,
dans lequel le second réseau d'antennes (30) est au moins partiellement entrelacé avec le premier réseau d'antennes mMIMO (12),
- un réseau de distribution (42, 44, 52, 54, 62, 64) destiné à distribuer les signaux d'entrée et/ou de sortie des éléments d'antenne du second réseau d'antennes disposés dans une couche de distribution (40),
- un réseau d'alimentation (14) disposé d'un premier côté de la couche de distribution et connecté aux premiers éléments d'antenne (13) ;
- un dispositif de transition (16) disposé d'un second côté de la couche de distribution et connecté à un module de radiofréquence, RF, mMIMO (18) ;
dans lequel le dispositif de transition (16) comprend :
- un premier ensemble de premiers connecteurs (23) destiné à se connecter au premier réseau d'antennes mMIMO (12), et les premiers connecteurs (23) sont connectés au réseau d'alimentation (14) ;
- un second ensemble de seconds connecteurs (27) destiné à se connecter au module RF mMIMO (18), et
- des interconnexions du premier ensemble de premiers connecteurs (23) au second ensemble de seconds connecteurs (27) traversant la couche de distribution (40) ;
dans lequel le réseau de distribution comprend des ouvertures (24) à travers lesquelles les interconnexions traversent le réseau de distribution ; et
dans lequel chaque interconnexion comprend une première partie (22) traversant le réseau de distribution (42, 44, 52, 54, 62, 64) pour se connecter au premier connecteur (23), une seconde partie (26) destinée à se connecter au second connecteur (27) et une partie de connexion (28) destinée à acheminer les signaux entre la première partie (22) et la seconde partie (26).

2. Système d'antenne multibande selon la revendication 1, dans lequel le premier réseau d'antennes mMIMO comprend un réflecteur et dans lequel la couche de distribution (40) est disposée parallèlement au réflecteur.

3. Système d'antenne multibande selon l'une quelconque des revendications 1 ou 2, dans lequel le réseau de distribution est physiquement divisé en sous-réseaux de distribution (42, 44, 52, 54, 62, 64) pour différentes polarisations, dans lequel les ouvertures (24) sont disposées entre les sous-réseaux de distribution (42, 44, 52, 54, 62, 64).

4. Système d'antenne multibande selon l'une quelconque des revendications précédentes, dans lequel chacun des premiers connecteurs (23) est connecté par l'une des interconnexions à un second connecteur (27).

5. Système d'antenne multibande selon l'une quelconque des revendications précédentes, **caractérisé en ce que** les interconnexions égalisent la phase de chaque signal pour chacun des premiers éléments d'antenne (13).

6. Système d'antenne multibande selon la revendication 5, **caractérisé en ce que** les interconnexions ont des longueurs physiques individuelles destinées à fournir l'égalisation.

7. Système d'antenne multibande selon l'une quelconque des revendications précédentes, comprenant en outre un module RF mMIMO (18) destiné à piloter le premier réseau d'antennes mMIMO (12), dans lequel les seconds connecteurs (27) sont connectés au module RF mMIMO (18).

8. Système d'antenne multibande selon l'une quelconque des revendications précédentes, dans lequel le réseau d'alimentation (14) fournit une connexion d'alimentation à plus d'un des premiers éléments d'antenne (13) pour l'un des premiers connecteurs (23).
